# EUROPEAN PATENT APPLICATION

(11) **EP 2 582 147 A1**
(43) Date of publication of application: **17.04.2013**
(21) Application number: 12168854.3
(22) Date of filing: 22.05.2012
(51) Int. Cl.: H04N 21/433, H04N 21/858, H04N 21/431, H04N 21/8543

(54) **Digital broadcast recording and reproducing appartus and digital broadcast recording and reproducing method**

(30) Priority: 11.10.2011 JP 2011224313
(71) Applicant: Kabushiki Kaisha Toshiba, Tokyo 105-8001 (JP)
(72) Inventor: Nakajima, Yumiko, Tokyo, 105-8001 (JP)
(74) Representative: HOFFMANN EITLE

(57) **Abstract**

According to one embodiment, a digital broadcast recording and reproducing apparatus (1) includes: a receiver (2) configured to receive broadcasting data that contains broadcasting content and address information indicating a source of reproduction control information related to reproduction control of the broadcasting content; a storage (4) configured to store therein the broadcasting data received by the receiver (2) ; an acquisition module (6) configured to acquire the reproduction control information from the source indicated by the address information when the broadcasting content in the broadcasting data stored in the storage (4) is reproduced; and a reproducer (5) configured to reproduce the broadcasting content in accordance with the reproduction control information acquired by the acquisition module (6).

## Description

### FIELD

Embodiments described herein relate generally to a digital broadcast recording and reproducing apparatus and a digital broadcast recording and reproducing method.

### BACKGROUND

In recent years, the communication environment, such as the Internet, has been improved even in ordinary households. Compared with broadcasting, which is excellent in multiple addressing, communications are excellent in transmission of individual pieces of information. As a technology using such characteristics of the broadcasting and the communications, the Hybridcast system (Hybridcast: registered trademark) has been attracting attention. The Hybridcast system combines content obtained through the broadcasting with content obtained through the communications, thereby making it possible to provide a value-added content.

In the Hybridcast system, a display terminal, such as a television receiver, not only acquires content based on a broadcasting signal, but also accesses a server via a communication line, such as the Internet, to acquire content through communications. The display terminal then synthesizes the content based on the broadcasting signal (hereinafter, referred to as broadcasting content) and the content obtained through the communications, and displays the content thus synthesized. Each display terminal can acquire individual pieces of information through the communications, and can display a favorite content of a user.

Videos contained in the broadcasting content being broadcasted include some videos that are not desired to be displayed when the broadcasting content is recorded and reproduced. For example, because subtitles, such as a warning, earthquake information, accident information, and a prompt report of election returns, are information having great urgency and promptness, it is preferable that such subtitles be contained in a video being broadcasted. However, if subtitles, such as previous earthquake information and accident information, are displayed when the broadcasting content is recorded and viewed later, the subtitles disturb the user in viewing the program.

Therefore, there has been developed a digital broadcasting system that receives, by a receiver, digital broadcasting data in which program data, subtitle data, and management data containing display conditions for the subtitles are multi-layered, and that can cause the subtitles not to be displayed if the subtitles do not satisfy the display conditions.

Furthermore, there has been developed an image processing method that determines whether an object having a certain attribute is present in the digital broadcasting data, and that, if such an object having the attribute is determined to be present, causes the subtitles not to be displayed by hiding the object, replacing the object with an icon, and other ways.

In the technology described above, the digital broadcasting data needs to contain complex data such as the management data and the attribute data of the object in advance. As a result, the content of the digital broadcasting data is complicated, the amount of data to be broadcasted becomes large, and more effort and time are required to create the data. Furthermore, the content of control performed when reproducing the data is fixed, and various types of control fail to be performed.

It is an object of the present invention to provide a digital broadcast recording and reproducing apparatus and a digital broadcast recording and reproducing method that use digital broadcasting data in a simple configuration, and that can control reproduction of the broadcasting data more flexibly.

### SUMMARY

To overcome the problems and achieve the object mentioned above, according to an embodiment, a digital broadcast recording and reproducing apparatus (1) comprises: a receiver (2) configured to receive broadcasting data that contains broadcasting content and address information indicating a source of reproduction control information related to reproduction control of the broadcasting content; a storage (4) configured to store therein the broadcasting data received by the receiver (2); an acquisition module (6) configured to acquire the reproduction control information from the source indicated by the address information when the broadcasting content in the broadcasting data stored in the storage (4) is reproduced; and a reproducer (5) configured to reproduce the broadcasting content in accordance with the reproduction control information acquired by the acquisition module (6).

According to another embodiment of the invention, a digital broadcast recording and reproducing method comprises: receiving broadcasting data that contains broadcasting content and address information indicating a source of reproduction control information related to reproduction control of the broadcasting content; storing the broadcasting data received at the receiving; acquiring the reproduction control information from the source indicated by the address information when the broadcasting content in the broadcasting data stored at the storing is reproduced; and reproducing the broadcasting content in accordance with the reproduction control information acquired at the acquiring.

### BRIEF DESCRIPTION OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a digital broadcasting system containing a digital broadcast recording and reproducing apparatus according to an embodiment;
FIG. 2 is an exemplary view of a configuration of broadcasting data in the embodiment;
FIG. 3 is an exemplary view of a configuration of web data in the embodiment;
FIG. 4 is an exemplary view illustrating transmission and reception of data between a reproducer and a web browser in the embodiment;
FIG. 5 is an exemplary view for explaining reproduction control of broadcasting content in the digital broadcast recording and reproducing apparatus according to a first example in the embodiment;
FIG. 6 is an exemplary flowchart illustrating a process of the reproduction control in FIG. 5 in the embodiment;
FIG. 7 is an exemplary views for explaining reproduction control of broadcasting content in the digital broadcast recording and reproducing apparatus according to a second example in the embodiment;
FIG. 8 is an exemplary flowchart illustrating a process of the reproduction control in FIG. 7 in the embodiment;
FIG. 9 is an exemplary view for explaining reproduction control of broadcasting content in the digital broadcast recording and reproducing apparatus according to a third example in the embodiment;
FIG. 10 is an exemplary flowchart illustrating a process of the reproduction control in FIG. 9 in the embodiment;
FIG. 11 is an exemplary view for explaining reproduction control of broadcasting content in the digital broadcast recording and reproducing apparatus according to a fourth example in the embodiment;
FIG. 12 is an exemplary flowchart illustrating a process of the reproduction control in FIG. 11 in the embodiment;
FIG. 13 is an exemplary view of reproduction section information in the embodiment;
FIG. 14 is an exemplary view for explaining reproduction control of broadcasting content in the digital broadcast recording and reproducing apparatus according to a fifth example in the embodiment;
FIG. 15 is an exemplary flowchart illustrating a process of the reproduction control in FIG. 14 in the embodiment;
FIG. 16 is an exemplary view for explaining reproduction control of broadcasting content in the digital broadcast recording and reproducing apparatus according to a sixth example in the embodiment;
FIG. 17 is an exemplary flowchart illustrating a process of the reproduction control in FIG. 16 in the embodiment;
FIG. 18 is an exemplary view for explaining reproduction control of broadcasting content in the digital broadcast recording and reproducing apparatus according to a seventh example in the embodiment; and
FIG. 19 is an exemplary flowchart illustrating a process of the reproduction control in FIG. 18 in the embodiment.

### DETAILED DESCRIPTION

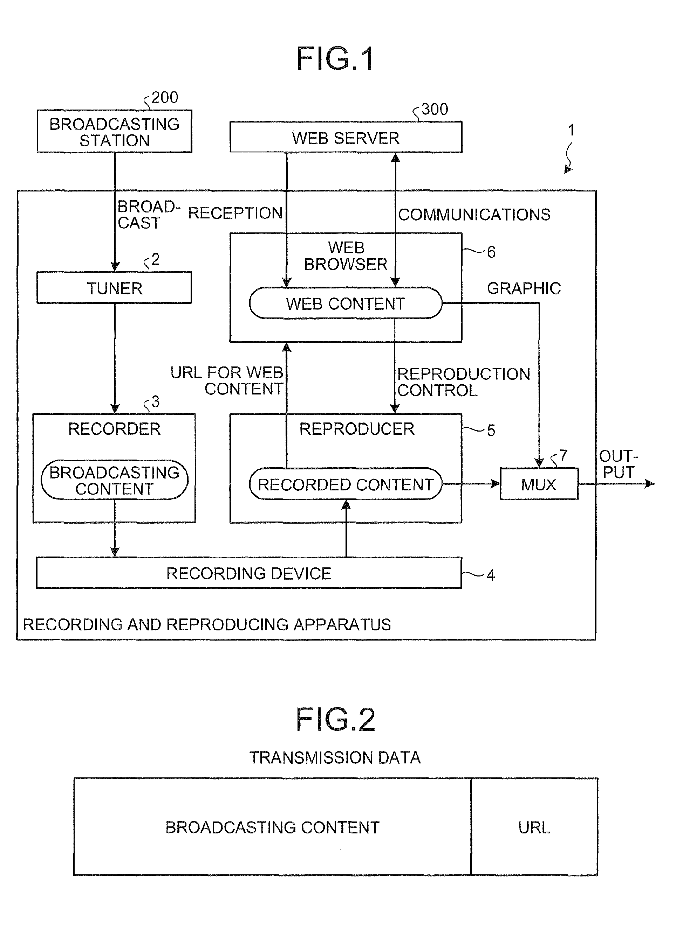

Exemplary embodiments of a digital broadcast recording and reproducing apparatus according to the present invention are described below with reference to the accompanying drawings. FIG. 1 is a block diagram of a digital broadcasting system containing a digital broadcast recording and reproducing apparatus according to an embodiment.

A digital broadcast recording and reproducing apparatus 1 receives broadcasting data from a broadcasting station 200 to store therein the broadcasting data, and performs communications with a web server 300 to receive web data from the web server 300.

The digital broadcast recording and reproducing apparatus 1 comprises a tuner 2 that receives broadcasting data broadcasted by the broadcasting station 200, a recorder 3 that performs recording control for causing a recording device 4 to store therein the broadcasting data received by the tuner 2, a reproducer 5 that performs reproduction control of broadcasting content stored in the recording device 4, a web browser 6 that communicates with the web server 300 to receive web data therefrom, and a multiplexer (mux) 7.

The tuner 2, for example, comprises a high-frequency amplifier circuit and a frequency converter circuit composed of a local oscillator circuit and a mixing circuit. The tuner 2 receives broadcasting data in a specific frequency band among broadcasting data, such as a digital television broadcasting signal (RF signal), received by an antenna, for example.

FIG. 2 is a view of a configuration of the broadcasting data in the embodiment. As illustrated in FIG. 2, the broadcasting data received by the tuner 2 contains broadcasting content, which are data of a moving image, a still image, sound, and the like, and a Uniform Resource Locator (URL) serving as address information used for causing the web browser 6, which will be described later, to access the web server 300. While such a URL is used as the address information in the present embodiment, the address information is not limited thereto. Alternatively, Uniform Resource Identifiers (URI) or the like other than the URL may be used.

The broadcasting data received by the tuner 2 passes through the recorder 3, and is stored in the recording device 4. At this time, the recording device 4 stores therein both the broadcasting content and the URL in the broadcasting data.

The reproducer 5 reads the broadcasting data recorded in the recording device 4, transmits the broadcasting content in the broadcasting data to the mux 7, and causes a display, which is not illustrated, to display the broadcasting content. At the same time, the reproducer 5 extracts the URL in the broadcasting data, and transmits the URL to the web browser 6. In addition, the reproducer 5 performs reproduction control of the broadcasting content stored in the recording device 4 (hereinafter, referred to as a "recorded content") in accordance with a reproduction control script transmitted from the web browser 6 as will be described later. Furthermore, the reproducer 5 controls the mux 7 so as to change a method of synthesis of the broadcasting content transmitted from the reproducer 5 and web content transmitted from the web browser 6.

Based on the URL extracted by the reproducer 5, the web browser 6 accesses the web server 300 corresponding to the URL via the Internet to receive web data from the web server 300. The web browser 6 then generates the reproduction control script based on reproduction control information contained in the web data, and transmits the reproduction control script to the reproducer 5. Furthermore, the web browser 6 transmits the web content contained in the web data to the mux 7, and causes the display, which is not illustrated, to display the web content.

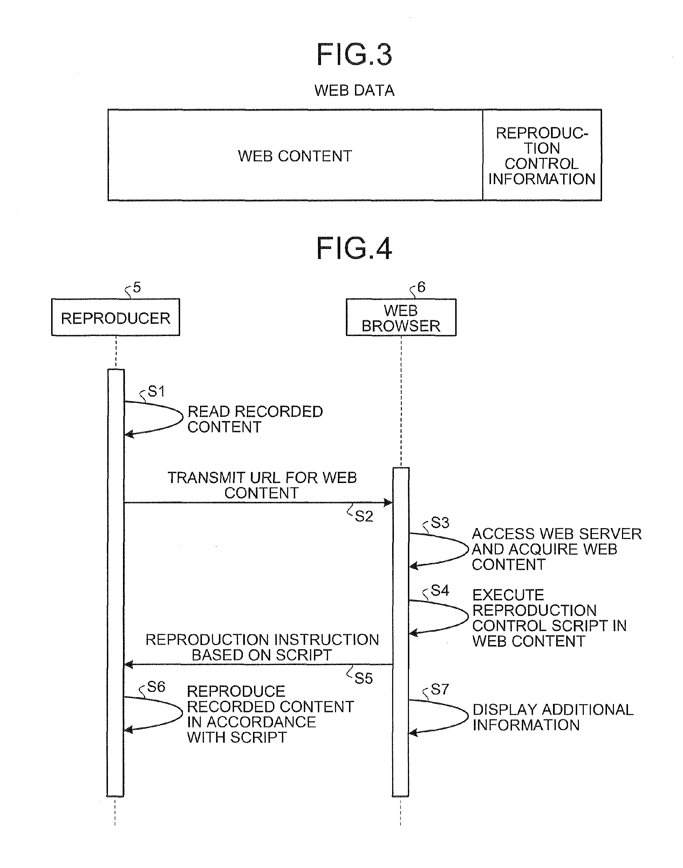

FIG. 3 is a view of a configuration of the web data in the embodiment. The web data contains web content data, which is data of a moving image, a still image, sound, and the like, and the reproduction control information used for reproduction control of the broadcasting content.

The mux 7 synthesizes the web content transmitted from the web browser 6 and the broadcasting content transmitted from the reproducer 5 under control performed by the reproducer 5. The mux then outputs the content thus synthesized to an external device, such as the display, which is not illustrated. If the mux 7 receives one of the web content from the web browser 6 and the broadcasting content from the reproducer 5, the mux 7 performs no synthesis, and transmits the content thus received to the display or the like without any change.

FIG. 4 is a view illustrating transmission and reception of the data between the reproducer 5 and the web browser 6 in the embodiment. The reproducer 5 reads the broadcasting data recorded in the recording device 4 (S1).

The reproducer 5 then transmits, to the web browser 6, the URL that is contained in the broadcasting data, and that is the address information of the web server 300 from which the reproduction control information is acquired (S2).

Subsequently, the web browser 6 that receives the URL accesses the web server 300 by using the URL, and acquires the web content contained in the web data (S3).

Furthermore, the web browser 6 acquires the reproduction control information contained in the web data, and generates the reproduction control script from the reproduction control information (S4).

The web browser 6 then transmits the reproduction control script thus generated to the reproducer 5 (S5).

The reproducer 5 that receives the reproduction control script performs reproduction control of the recorded content in accordance with the reproduction control script (S6).

Additional information, such as character information and image indicating product information, can be contained as the web content, for example. In this case, the web browser 6 outputs the additional information to the mux 7, thereby causing the display, which is not illustrated, to display the additional information (S7).

Examples of reproduction control of the broadcasting content in the digital broadcast recording and reproducing apparatus 1 will be described below.

### First Example

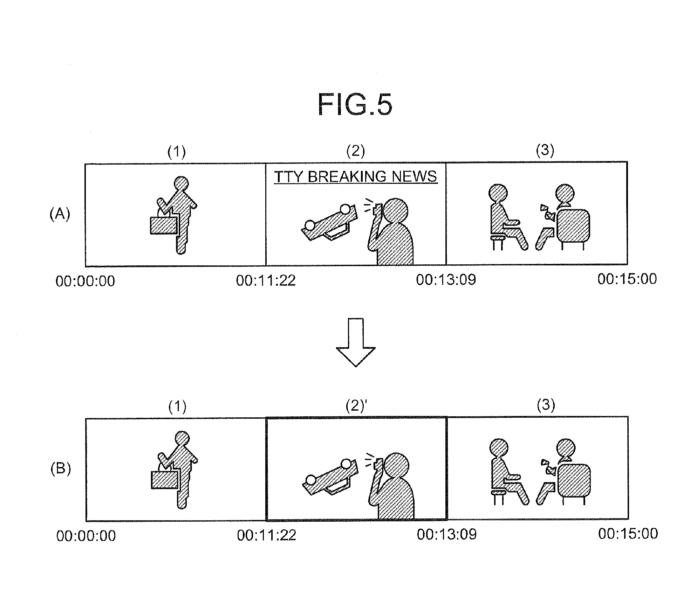

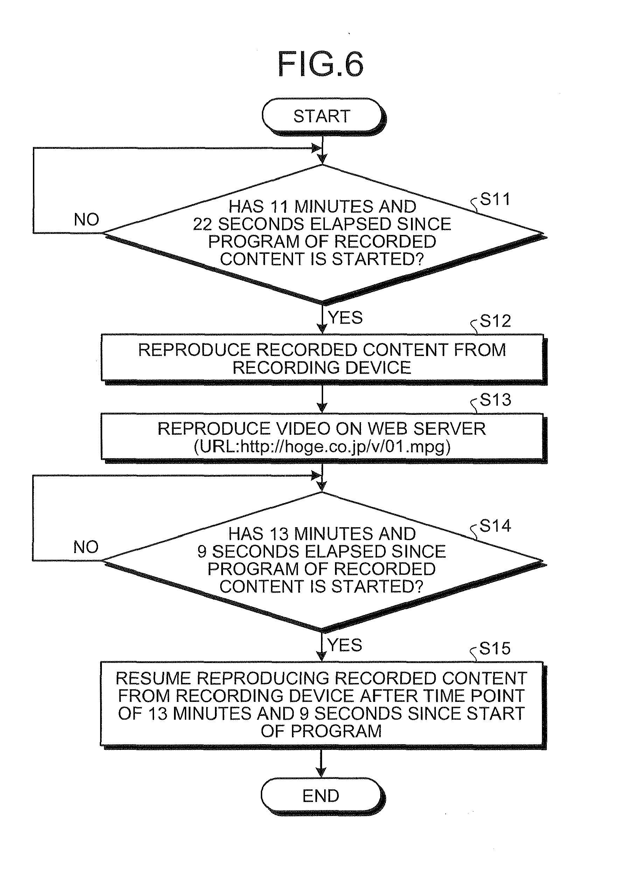

FIG. 5 is a view for explaining reproduction control of broadcasting content in the digital broadcast recording and reproducing apparatus according to a first example in the embodiment. FIG. 6 is a flowchart illustrating a process of the reproduction control in FIG. 5 in the embodiment.

In the reproduction control according to the present example, an explanation is made of the case where subtitles indicating breaking news are displayed in a broadcasting program serving as the recorded content stored in the recording device 4. In the present example, when the recorded content is being reproduced, the recorded content in a predetermined time period in which the subtitles are being displayed is replaced with web content whose contents are the same as those of the recorded content, and from which the subtitles are deleted. Thus, a moving image whose contents are the same as those of the recorded content, and from which the subtitles are deleted is provided.

FIG. 5(A) illustrates a moving image of 15 minutes as an example of the recorded content. In the moving image, subtitles indicating breaking news are displayed from a time point of 11 minutes and 22 seconds to a time point of 13 minutes and 9 seconds after the start of reproduction.

To perform the reproduction control described in the present example, the web data received by the web browser 6 from the web server 300 contains reproduction control information for causing the reproducer 5 to follow the flowchart illustrated in FIG. 6. The web browser 6 generates a reproduction control script based on the reproduction control information, and transmits the reproduction control script to the reproducer 5.

The reproducer 5 that receives the reproduction control script determines whether the recorded content has been reproduced up to the time point of 11 minutes and 22 seconds since the reproduction of the recorded content is started (S11). If the recorded content has not been reproduced up to the time point of 11 minutes and 22 seconds yet (No at S11), the reproducer 5 continues reproducing the recorded content up to the time point.

By contrast, if it is determined that the recorded content has been reproduced up to the time point of 11 minutes and 22 seconds (Yes at S11), the reproducer 5 stops reading the recorded content from the recording device 4, and stops reproducing the recorded content after the time point of 11 minutes and 22 seconds (S12).

Subsequently, the web browser 6 downloads a section corresponding to the moving image after the time point of 11 minutes and 22 seconds from the web server 300 storing therein data (corrected data) that is a program having the same contents as those of the recorded content, and from which the subtitles are deleted as the web content (S13). The web browser 6 then transmits the corrected data thus downloaded to the display via the mux 7, and causes the external display to display the corrected data.

Subsequently, the reproducer 5 determines whether the corrected data has been reproduced up to a time point corresponding to the time point of 13 minutes and 9 seconds since the reproduction of the recorded content is started (S14). If the corrected data has not been reproduced up to the time point of 13 minutes and 9 seconds yet (No at S14), the reproducer 5 continues reproducing the corrected data up to the time point.

By contrast, if it is determined that the corrected data has been reproduced up to the time point corresponding to the time point of 13 minutes and 9 seconds since the reproduction of the recorded content is started (Yes at S14), the reproducer 5 reads the recorded content after the time point of 13 minutes and 9 seconds since the start of the reproduction from the recording device 4 instead of displaying the corrected data, and resumes reproducing the recorded content (S15).

With the reproduction control described in the first example, even if broadcasting data in a simple configuration only with a URL contained is used, it is possible to reproduce a moving image without subtitles when broadcasting content containing the subtitles is being recorded and reproduced. The download of the corrected data is preferably started before the start of reproduction of the recorded content, and is more preferably started at the same time as the start of reproduction. Furthermore, the corrected data may be reproduced by streaming from the time point of 11 minutes and 22 seconds.

### Second Example

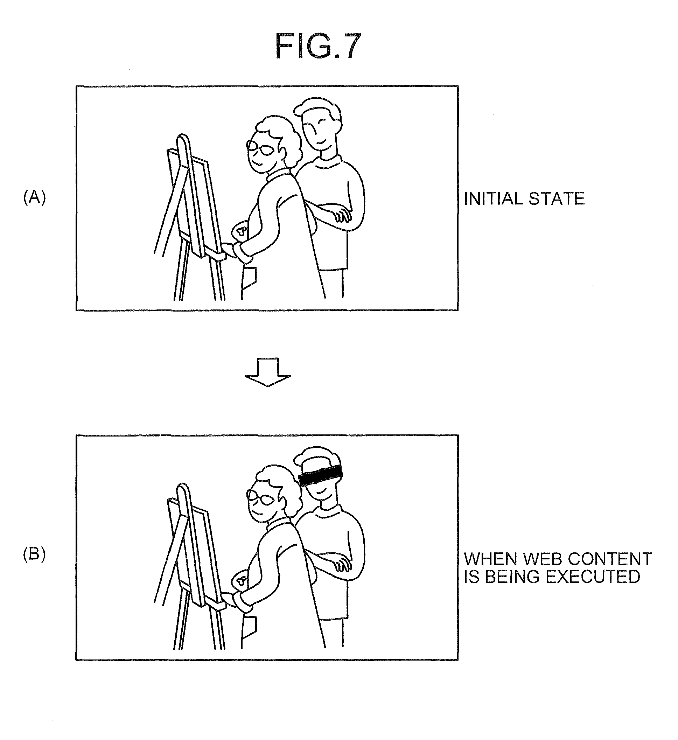

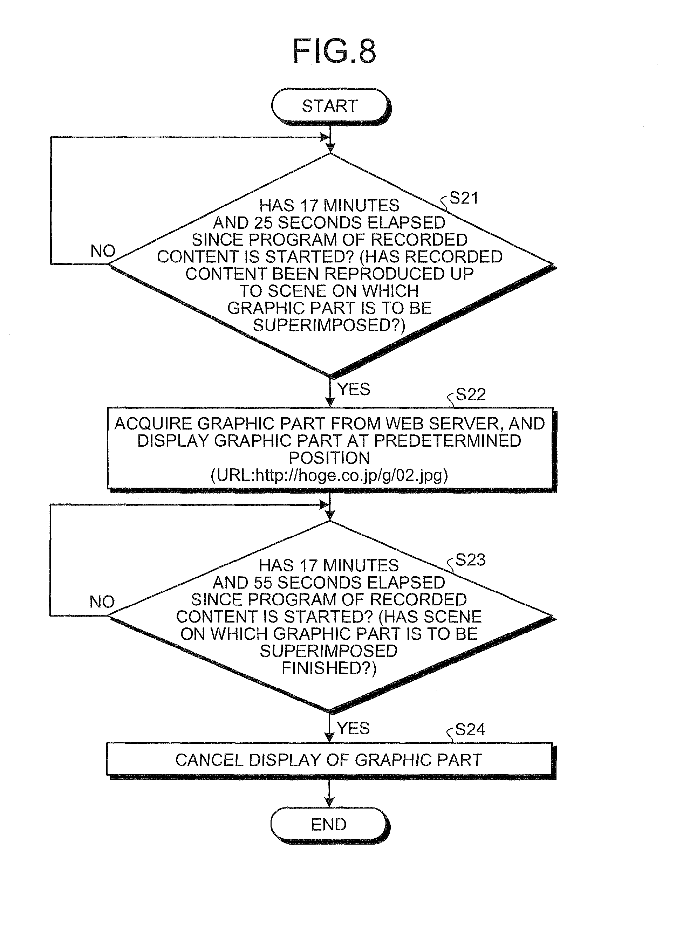

FIG. 7 is a view for explaining reproduction control of broadcasting content in the digital broadcast recording and reproducing apparatus according to a second example in the embodiment. FIG. 8 is a flowchart illustrating a process of the reproduction control in FIG. 7 in the embodiment.

In the reproduction control according to the present example, an explanation is made of the case where an image part serving as the web content is displayed in a manner superimposed on a predetermined portion in a broadcasting program serving as the recorded content. In the present example, an explanation is made of the case where, in order to make a face of a specific person appearing in a predetermined time period unidentified, a graphic part is displayed in a manner superimposed on the face of the person when the recorded content is being reproduced. In the present example, it is inappropriate to display the person appearing from a time point of 17 minutes and 25 seconds to a time point of 17 minutes and 55 seconds after the start of reproduction of the recorded content. Therefore, a graphic part for masking is displayed in a manner superimposed on a portion corresponding to the eyes of the person so as to make the person unidentified.

In this case, the web data received by the web browser 6 from the web server 300 contains reproduction control information for causing the reproducer 5 to follow the flowchart illustrated in FIG. 8. The web browser 6 generates a reproduction control script based on the reproduction control information, and transmits the reproduction control script to the reproducer 5.

In this case, the reproducer 5 determines whether the recorded content has been reproduced up to the time point of 17 minutes and 25 seconds since the reproduction of the recorded content is started (S21). If it is determined that the recorded content has not been reproduced up to the time point of 17 minutes and 25 seconds yet (No at S21), the reproducer 5 continues reproducing the recorded content up to the time point.

By contrast, if it is determined that the recorded content has been reproduced up to the time point of 17 minutes and 25 seconds (Yes at S21), the reproducer 5 transmits a URL to the web browser 6. The web browser 6 accesses the web server 300 by using the URL, receives the graphic part for masking as the web content, and transmits the graphic part to the mux 7. Furthermore, the reproducer 5 performs control on the mux 7 so as to superimpose the graphic part for masking transmitted from the web browser 6 on the portion corresponding to the eyes of the predetermined person in the recorded content received from the reproducer 5, and to transmit the content to the external display (S22).

Subsequently, the reproducer 5 determines whether the recorded content has been reproduced up to the time point of 17 minutes and 55 seconds since the reproduction of the recorded content is started (S23). If it is determined that the recorded content has not been reproduced up to the time point of 17 minutes and 55 seconds yet (No at S23), the reproducer 5 continues reproducing the recorded content and displaying the graphic part up to the time point.

By contrast, if it is determined that the recorded content has been reproduced up to the time point of 17 minutes and 55 seconds since the reproduction of the recorded content is started (Yes at S23), the person for whom the masking is required does not appear any more. Therefore, the reproducer 5 performs control on the mux 7 so as not to display the graphic part for masking transmitted from the web server 300, thereby cancelling the display of the graphic part (S24).

With the reproduction control described in the second example, even if broadcasting data in a simple configuration only with a URL contained is used, it is possible to display a graphic part in a manner superimposed on a recorded content when the recorded content is being reproduced. The download of the graphic part is preferably started before the time point of 17 minutes and 25 seconds, and is more preferably started at the same time as the start of reproduction of the recorded content. Furthermore, the graphic part may be reproduced by streaming from the time point of 17 minutes and 25 seconds.

### Third Example

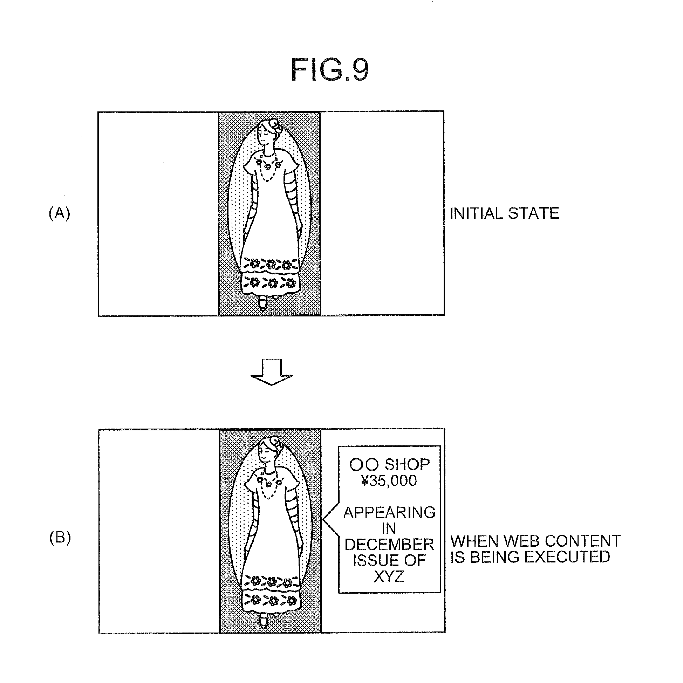

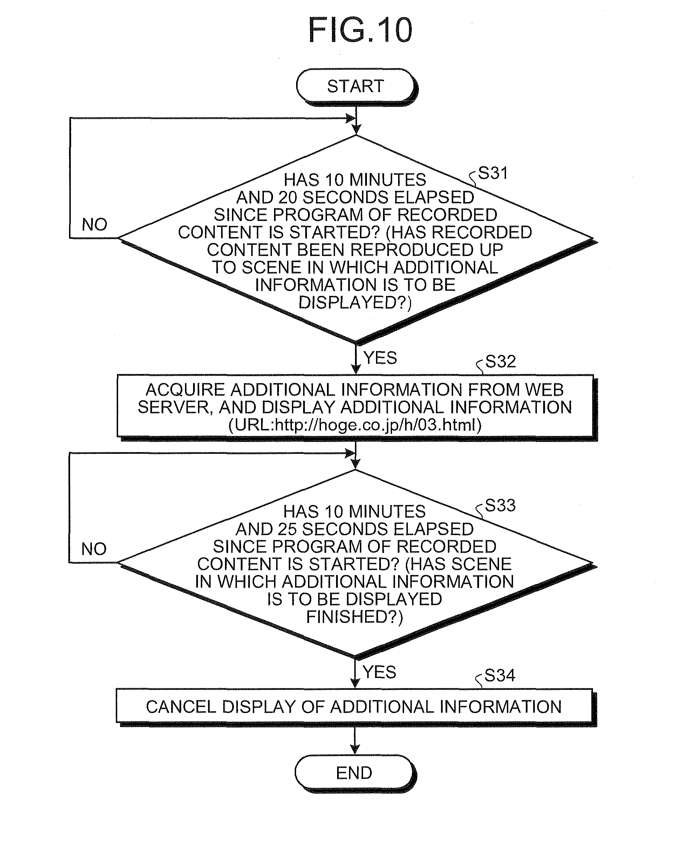

FIG. 9 is a view for explaining reproduction control of broadcasting content in the digital broadcast recording and reproducing apparatus according to a third example in the embodiment. FIG. 10 is a flowchart illustrating a process of the reproduction control in FIG. 9 in the third example in the embodiment.

In the reproduction control according to the present example, an explanation is made of the case where additional information, such as product information, serving as the web content is displayed on a predetermined portion in a broadcasting program serving as the recorded content. In the present example, an explanation is made of the case where, in order to display detailed information, such as a sales outlet and the price of a product appearing in a predetermined time period, and a magazine that carries the product, the additional information is displayed in a manner superimposed on the right side of the image of the product when the recorded content is being reproduced. In the present example, the additional information for the product being displayed is displayed from a time point of 10 minutes and 20 seconds to a time point of 10 minutes and 25 seconds after the start of reproduction of the recorded content.

In this case, the web data received by the web browser 6 from the web server 300 contains reproduction control information for causing the reproducer 5 to follow the flowchart illustrated in FIG. 10. The web browser 6 executes a reproduction control script based on the reproduction control information, and transmits a reproduction control instruction based on the reproduction control script to the reproducer 5. A URL is transmitted from the reproducer 5 to the web browser 6 at the same time as the start of reproduction of the recorded content, whereby download of the web data from the web server 300 is started.

The reproducer 5 determines whether the recorded content has been reproduced up to the time point of 10 minutes and 20 seconds since the reproduction of the recorded content is started (S31). If it is determined that the recorded content has not been reproduced up to the time point of 10 minutes and 20 seconds yet (No at S31), the reproducer 5 continues reproducing the recorded content up to the time point.

By contrast, if it is determined that the recorded content has been reproduced up to the time point of 10 minutes and 20 seconds (Yes at S31), the reproducer 5 controls the mux 7 so as to display the additional information downloaded from the web server 300 by the web browser 6 as the web content. The mux 7 arranges the additional information transmitted from the web server 300 on the right side of the display portion of the recorded content received from the reproducer 5, and transmits the content to the external display (S32).

Subsequently, the reproducer 5 determines whether the recorded content has been reproduced up to the time point of 10 minutes and 25 seconds since the reproduction of the recorded content is started (S33). If it is determined that the recorded content has not been reproduced up to the time point of 10 minutes and 25 seconds yet (No at S33), the reproducer 5 continues reproducing the recorded content and displaying the additional information up to the time point.

By contrast, if it is determined that the recorded content has been reproduced up to the time point of 10 minutes and 25 seconds since the reproduction of the recorded content is started (Yes at S33), the reproducer 5 performs control on the mux 7 so as not to display the additional information transmitted from the web server 300, thereby cancelling the display of the additional information (S34).

With the reproduction control described in the third example, even if broadcasting data in a simple configuration only with a URL contained is used, it is possible to display additional information together with a recorded content when the recorded content is being reproduced. The transmission of the URL from the reproducer 5 to the web browser 6 and the download of the web data from the web server 300 are preferably started at the same time as the start of reproduction of the recorded content.

### Fourth Example

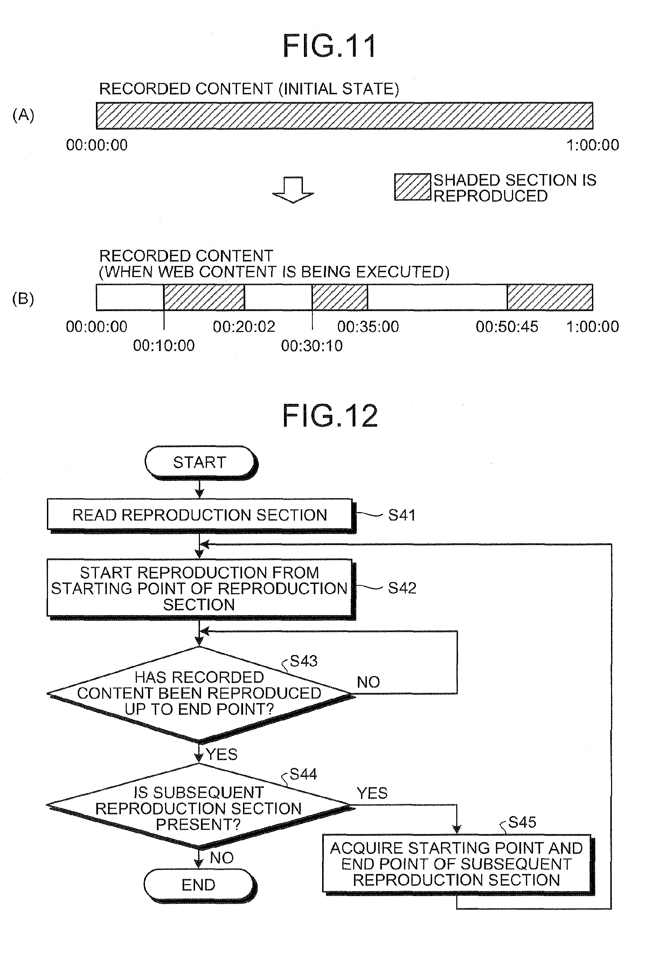

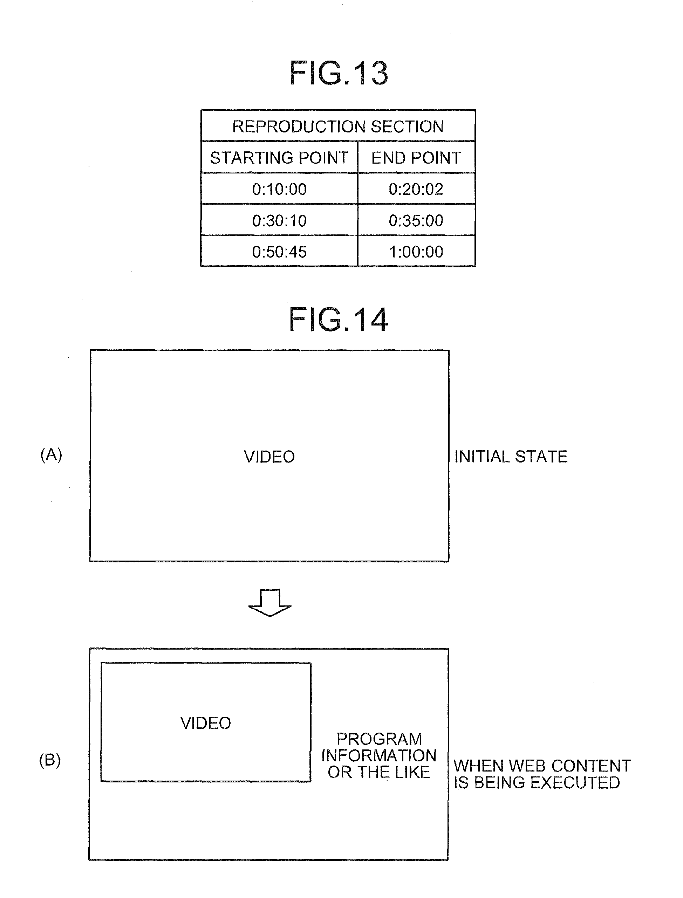

FIG. 11 is a view for explaining reproduction control of broadcasting content in the digital broadcast recording and reproducing apparatus according to a fourth example in the embodiment. FIG. 12 is a flowchart illustrating a process of the reproduction control in FIG. 11 in the embodiment. FIG. 13 is a view of reproduction section information in the embodiment.

In the reproduction control according to the present example, an explanation is made of the case where digest reproduction in which a part of the recorded content is extracted and reproduced is performed. In the present example, from a one-hour recorded content illustrated in FIG. 11(A), three sections are extracted and reproduced as illustrated in FIG. 11 (B). The three sections are a section from a time point of 10 minutes to a time point of 20 minutes and 2 seconds, a section from a time point of 30 minutes and 10 seconds to a time point of 35 minutes, and a section from a time point of 50 minutes and 45 seconds to a time point of one hour after the start of reproduction of the recorded content. A URL is transmitted from the reproducer 5 to the web browser 6 at the same time as the start of reproduction of the recorded content, whereby download of the web data from the web server 300 is started.

In this case, the web data received by the web browser 6 from the web server 300 contains reproduction control information for causing the reproducer 5 to follow the flowchart illustrated in FIG. 12. The web browser 6 executes a reproduction control script based on the reproduction control information, and transmits a reproduction control instruction based on the reproduction control script to the reproducer 5.

The reproducer 5 reads, from the web browser 6, the reproduction section information illustrated in FIG. 13 contained in the reproduction control information acquired by the web browser 6 from the web server 300 (S41). The reproduction section information is configured by specifying the time points from the start of reproduction of the recorded content serving as the starting points and the end points of the sections in the recorded content to be reproduced.

Subsequently, the reproducer 5 starts to reproduce the recorded content from the starting point of the section to be reproduced first (S42).

The reproducer 5 then determines whether the recorded content has been reproduced up to the end point of the reproduction section (S43). If it is determined that the recorded content has not been reproduced up to the end point yet (No at S43), the reproducer 5 continues reproducing the recorded content.

By contrast, if it is determined that the recorded content has been reproduced up to the end point of the reproduction section (Yes at S43), the reproducer 5 refers to the reproduction section information, and determines whether a subsequent reproduction section is present (S44).

If it is determined that a subsequent reproduction section is present (Yes at S44), the reproducer 5 acquires the starting point and the end point of the subsequent reproduction section from the reproduction section information, and reproduces the subsequent reproduction section (S45).

By contrast, if it is determined that no subsequent reproduction section is present (No at S44), the reproducer 5 finishes reproducing the recorded content.

With the reproduction control described in the fourth example, even if broadcasting data in a simple configuration only with a URL contained is used, it is possible to perform digest reproduction of the recorded content.

### Fifth Example

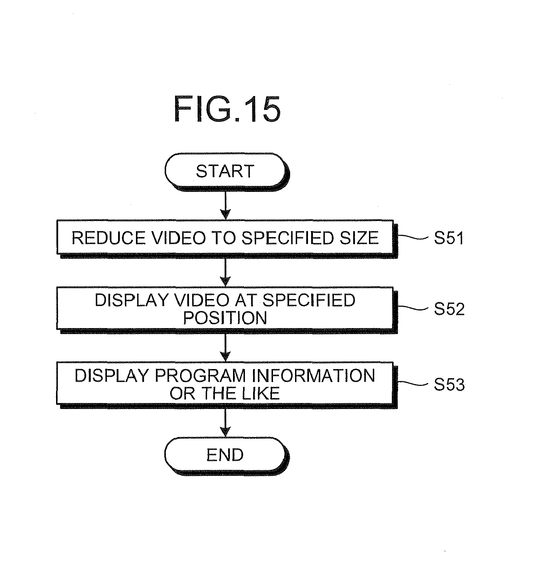

FIG. 14 is a view for explaining reproduction control of broadcasting content in the digital broadcast recording and reproducing apparatus according to a fifth example in the embodiment. FIG. 15 is a flowchart illustrating a process of the reproduction control in FIG. 14 in the embodiment.

In the reproduction control according to the present example, a recorded content ordinarily displayed on the entire display as illustrated in FIG. 14(A) is displayed in a manner reduced in size as illustrated in FIG. 14(B), and additional information, such as program information, is displayed together with the recorded content in a blank space generated by reduced display in the screen.

In this case, the web data received by the web browser 6 from the web server 300 contains reproduction control information for causing the reproducer 5 to follow the flowchart illustrated in FIG. 15. The web browser 6 executes a reproduction control script based on the reproduction control information, and transmits a reproduction control instruction based on the reproduction control script to the reproducer 5. A URL is transmitted from the reproducer 5 to the web browser 6 at the same time as the start of reproduction of the recorded content, whereby download of the web data from the web server 300 is started.

The reproducer 5 reduces the recorded content to be reproduced in size (S51). Reproduction control information for reducing the broadcasting content in size is contained in the reproduction control information acquired by the web browser 6 from the web server 300. The web browser 6 generates a reproduction control script based on the reproduction control information, and transmits the reproduction control script to the reproducer 5. The reproducer 5 performs the reproduction control illustrated in FIG. 14 based on the reproduction control script.

Subsequently, the reproducer 5 displays the recorded content thus reduced at a predetermined position (on the upper left portion of the screen in FIG. 14(B)) in the display (S52). The display position is also contained in the reproduction control information. At this time, a blank space in which no recorded content is displayed is generated over the right side and the lower side of the screen.

The reproducer 5 then controls the mux 7 so as to display program information contained in the web data received by the web browser 6 from the web server 300 in the blank space on the screen (S53).

With the reproduction control described in the fifth example, even if broadcasting data in a simple configuration only with a URL contained is used, it is possible to reduce the recorded content in size, and to display the program information and the like in the blank space thus generated.

### Sixth Example

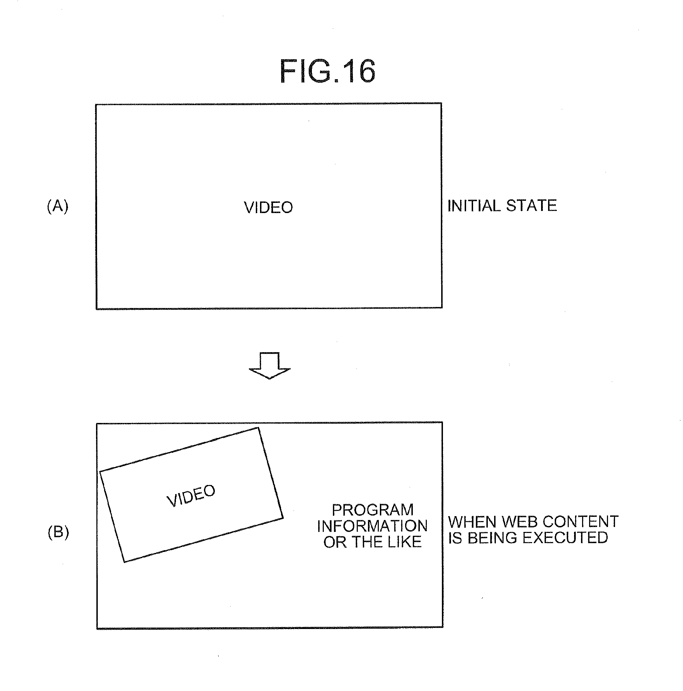

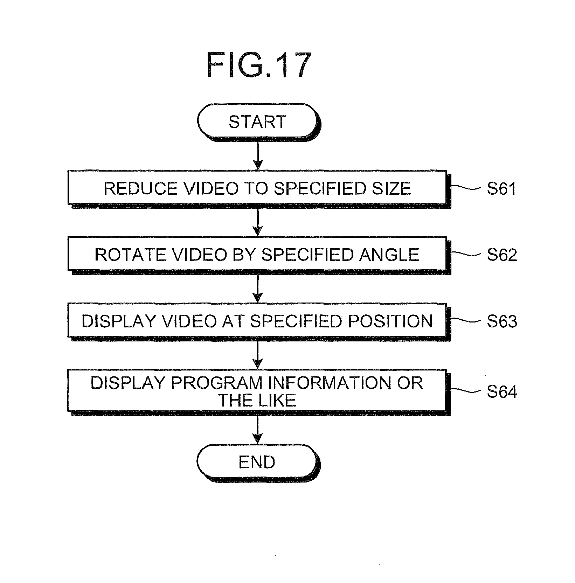

FIG. 16 is a view for explaining reproduction control of broadcasting content in the digital broadcast recording and reproducing apparatus according to a sixth example in the embodiment. FIG. 17 is a flowchart illustrating a process of the reproduction control in FIG. 16 in the embodiment.

In the reproduction control according to the present example, a recorded content ordinarily displayed on the entire display as illustrated in FIG. 16(A) is displayed in a manner reduced in size and rotated by a predetermined angle as illustrated in FIG. 16(B), and additional information, such as program information, is displayed together with the recorded content in a blank space generated by reduced display in the screen.

In this case, the web data received by the web browser 6 from the web server 300 contains reproduction control information for causing the reproducer 5 to follow the flowchart illustrated in FIG. 17. The web browser 6 generates a reproduction control script based on the reproduction control information, and transmits the reproduction control script to the reproducer 5. A URL is transmitted from the reproducer 5 to the web browser 6 at the same time as the start of reproduction of the recorded content, whereby download of the web data from the web server 300 is started.

The reproducer 5 reduces the recorded content to be reproduced in size (S61). Because the processing at S61 is the same as that at S51 described with reference to FIG. 15 in the fifth example, the explanation thereof will be omitted.

Subsequently, the reproducer 5 rotates the recorded content thus reduced by a predetermined angle (S62). The rotating operation is also contained in the reproduction control information.

The reproducer 5 then displays the recorded content thus reduced and rotated at a predetermined position (on the upper left portion of the screen in FIG. 16(B)) in the display (S63). Because the processing at S63 is the same as that at S52 described with reference to FIG. 15 in the fifth example, the explanation thereof will be omitted.

The reproducer 5 then displays program information in the blank space on the screen (S64). Because the processing at S64 is the same as that at S53 described with reference to FIG. 15 in the fifth example, the explanation thereof will be omitted.

With the reproduction control described in the sixth example, even if broadcasting data in a simple configuration only with a URL contained is used, it is possible to reduce and rotate the recorded content, and to display the program information and the like in the blank space thus generated.

### Seventh Example

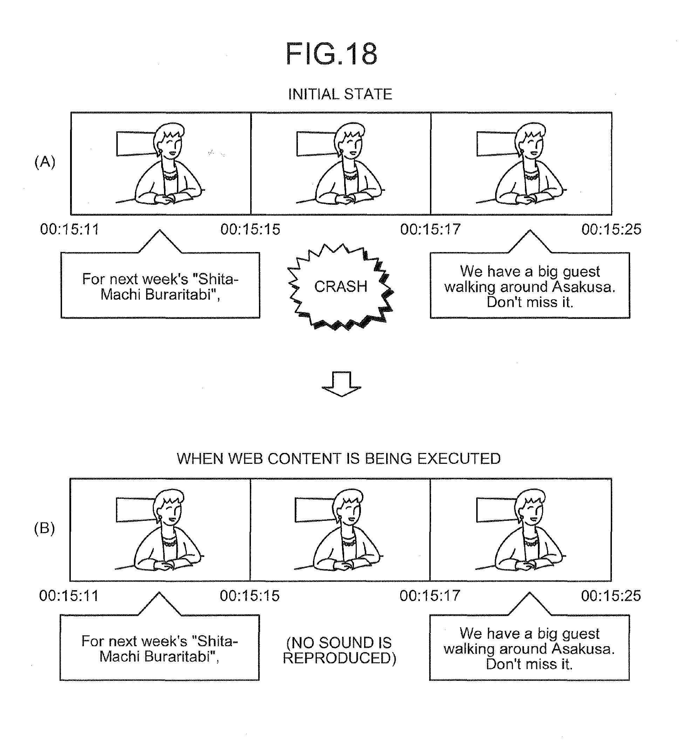

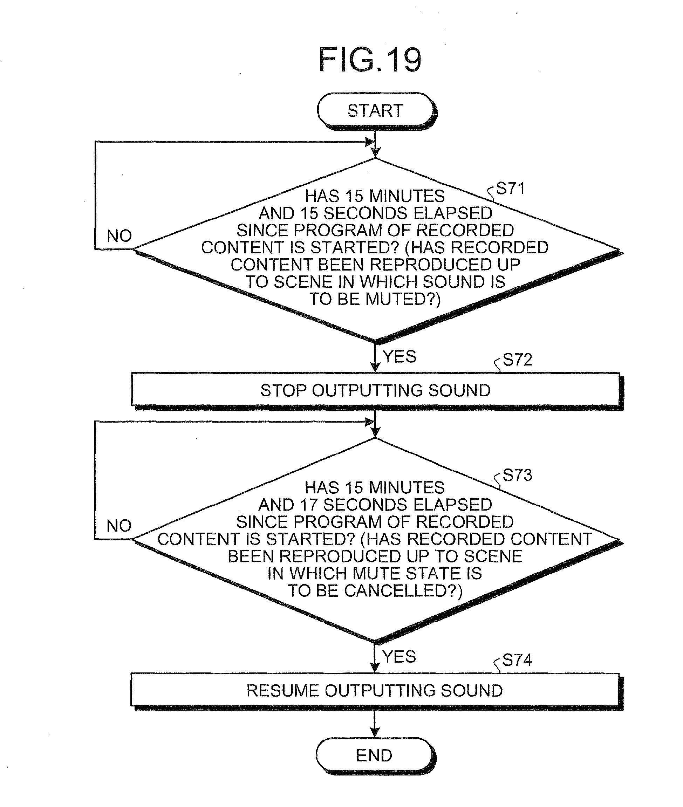

FIG. 18 is a view for explaining reproduction control of broadcasting content in the digital broadcast recording and reproducing apparatus according to a seventh example in the embodiment. FIG. 19 is a flowchart illustrating a process of the reproduction control in FIG. 18 in the embodiment.

In the reproduction control according to the present example, as illustrated in FIG. 18(B), it is possible to delete (mute) inappropriate noise generated by a broadcasting accident or the like occurring while a program is on the air as illustrated in FIG. 18(A) when the recorded content is being reproduced. Specifically, as illustrated in FIG. 18(A), crashing noise inappropriate for broadcasting is generated between a time point of 15 minutes and 15 seconds and a time point of 15 minutes and 17 seconds after the start of reproduction of the broadcasting content. The noise is recorded as the sound of the broadcasting content. The reproduction control is performed such that the noise between the time point of 15 minutes and 15 seconds and the time point of 15 minutes and 17 seconds after the start of the reproduction is muted when the broadcasting content is being recorded and reproduced.

In this case, the web data received by the web browser 6 from the web server 300 contains reproduction control information for causing the reproducer 5 to follow the flowchart illustrated in FIG. 19. In other words, the web data contains reproduction control information for muting the sound between the time point of 15 minutes and 15 seconds and the time point of 15 minutes and 17 seconds after the start of the reproduction. The web browser 6 generates a reproduction control script based on the reproduction control information, and transmits the reproduction control script to the reproducer 5. A URL is transmitted from the reproducer 5 to the web browser 6 at the same time as the start of reproduction of the recorded content, whereby download of the web data from the web server 300 is started.

The reproducer 5 determines whether the recorded content has been reproduced up to the time point of 15 minutes and 15 seconds since the reproduction of the recorded content is started (S71). If it is determined that the recorded content has not been reproduced up to the time point of 15 minutes and 15 seconds yet (No at S71), the reproducer 5 continues reproducing the recorded content up to the time point.

By contrast, if it is determined that the recorded content has been reproduced up to the time point of 15 minutes and 15 seconds (Yes at S71), the reproducer 5 mutes the sound of the recorded content from the time point of 15 minutes and 15 seconds (S72).

Subsequently, the reproducer 5 determines whether the recorded content has been reproduced up to the time point of 15 minutes and 17 seconds since the reproduction of the recorded content is started (S73). If it is determined that the recorded content has not been reproduced up to the time point of 15 minutes and 17 seconds yet (No at S73), the reproducer 5 continues reproducing the recorded content in the mute state up to the time point.

By contrast, if it is determined that the recorded content has been reproduced up to the time point of 15 minutes and 17 seconds since the reproduction of the recorded content is started (Yes at S73), the reproducer 5 cancels the mute state of the recorded content being reproduced, thereby resuming outputting the sound (S74).

With the reproduction control described in the seventh example, even if broadcasting data in a simple configuration only with a URL contained is used, it is possible to mute the sound of the recorded content for a desired time period when the recorded content is being reproduced.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A digital broadcast recording and reproducing apparatus (1) comprising:
a receiver (2) configured to receive broadcasting data that contains broadcasting content and address information indicating a source of reproduction control information related to reproduction control of the broadcasting content;
a storage (4) configured to store therein the broadcasting data received by the receiver (2);
an acquisition module (6) configured to acquire the reproduction control information from the source indicated by the address information when the broadcasting content in the broadcasting data stored in the storage (4) is reproduced; and
a reproducer (5) configured to reproduce the broadcasting content in accordance with the reproduction control information acquired by the acquisition module (6).

2. The digital broadcast recording and reproducing apparatus (1) of Claim 1, wherein
the acquisition module (6) is configured to acquire corrected data obtained by correcting a part or whole of the broadcasting data from the source, and
the reproducer (5) is configured to replace at least a part of the broadcasting content with the corrected data to generate resulting content, and to reproduce the resulting content.

3. The digital broadcast recording and reproducing apparatus (1) of Claim 1 or 2, wherein
the acquisition module (6) is configured to acquire web content from the source, and
the reproducer (5) is configured to synthesize the broadcasting content and the web content to generate resulting content, and to reproduce the resulting content.

4. The digital broadcast recording and reproducing apparatus (1) of one of Claims 1 to 3, wherein the reproducer (5) is configured to extract a part of the broadcasting content, and to reproduce the extracted part of the broadcasting content.

5. The digital broadcast recording and reproducing apparatus (1) of one of Claims 1 to 4, wherein the reproducer (5) is configured to change a reproduction method of the broadcasting content.

6. The digital broadcast recording and reproducing apparatus (1) of one of Claims 1 to 5, wherein
the acquisition module (6) is configured to acquire Web content from the source, and
the reproducer (5) is configured to change a reproduction method of the broadcasting content, and to synthesize the broadcasting content and the web content.

7. The digital broadcast recording and reproducing apparatus (1) of one of Claims 1 to 6, wherein the reproducer (5) is configured to mute sound for at least a part of a time period when the broadcasting content is reproduced.

8. The digital broadcast recording and reproducing apparatus (1) of any one of Claims 1 to 7, wherein the acquisition module (6) is configured to access the source when reproduction of the broadcasting content is started.

9. A digital broadcast recording and reproducing method comprising:
receiving broadcasting data that contains broadcasting content and address information indicating a source of reproduction control information related to reproduction control of the broadcasting content;
storing the broadcasting data received at the receiving;
acquiring the reproduction control information from the source indicated by the address information when the broadcasting content in the broadcasting data stored at the storing is reproduced; and
reproducing the broadcasting content in accordance with the reproduction control information acquired at the acquiring.
